# EUROPÄISCHE PATENTANMELDUNG

(11) **EP 4 841 886 A1**
(43) Veröffentlichungstag der Anmeldung: **18.11.2026**
(21) Anmeldenummer: 25175977.5
(22) Anmeldetag: 13.05.2025
(51) Int. Cl.: H02P 29/024, A47L 9/28, B25F 1/00, H02H 1/00, H02P 29/60

(54) **ELEKTRISCHE MASCHINE MIT EINEM ELEKTROMOTOR UND VERFAHREN ZUM STEUERN DER ELEKTRISCHEN MASCHINE**

(71) Anmelder: Hilti Aktiengesellschaft, 9494 Schaan (LI)
(72) Erfinder: Hurka, Dr., Florian, 86459 Margertshausen (DE)
(74) Vertreter: Hilti Aktiengesellschaft Corporate Intellectual Property

(57) **Zusammenfassung**

Die Erfindung betrifft eine elektrische Maschine (1), insbesondere ein elektrisches Werkzeug (20) oder eine Saugvorrichtung (2), mit einem Elektromotor (29) und einer Motorsteuerung (42), wobei die Motorsteuerung (42) eine Steuerungseinrichtung (44), zumindest einen Leistungsverstärker (46) und zumindest ein Leistungsbauteil (48) aufweist, wobei die Steuerungseinrichtung (44) dazu eingerichtet ist, zumindest ein Steuersignal (50) zum Steuern des Elektromotors (29) an den zumindest einen Leistungsverstärker (46) bereitzustellen, und wobei der zumindest eine Leistungsverstärker (46) dazu eingerichtet ist, das bereitgestellte Steuersignal (50) in zumindest ein Schaltsignal (52) für das zumindest eine Leistungsbauteil (48) umzuwandeln, wobei die elektrische Maschine (1) weiterhin zumindest eine Erfassungseinrichtung (54) aufweist, die dazu ausgebildet ist, zumindest einen Zustand der elektrischen Maschine (1) zu erfassen und zumindest ein Zustandssignal (56, 62, 64) auszugeben, das indikativ für den zumindest einen erfassten Zustand ist, wobei die Steuerungseinrichtung (44) dazu ausgebildet ist, wenn das zumindest eine ausgegebene Zustandssignal (56, 62, 64) außerhalb eines vorgegebenen Werts liegt, den Leistungsverstärker (46) zu veranlassen, kein Schaltsignal (52) an das zumindest eine Leistungsbauteil (48) auszugeben.

## Beschreibung

Die vorliegende Erfindung betrifft eine elektrische Maschine mit einem Elektromotor und einer Motorsteuerung. Des Weiteren betrifft die vorliegende Erfindung ein Verfahren zum Steuern einer elektrischen Maschine.

### Stand der Technik

Um einen Elektromotor zu betreiben, ist es notwendig eine Motorsteuerung vorzusehen, die die notwendige elektrische Energie zum Betrieb des Elektromotors bereitstellt. Üblicherweise umfassen Motorsteuerungen eine Reihe von elektrischen und elektronischen Bauteilen, die die notwendigen elektrischen Spannungen, Ströme und Signale bereitstellen. Es ist bekannt, dass manche elektrische und/oder elektronische Bauteile empfindlich darauf reagieren oder sogar zerstört werden können, wenn sie unter Bedingungen oder Zuständen betrieben werden, die außerhalb ihrer vorgegebenen Spezifikationen liegen. Zu den Bedingungen oder Zuständen, die sich negativ auf eine Leistungsfähigkeit von elektrischen und/oder elektronischen Bauteilen auswirken können, zählen zum Beispiel Überspannungszustände, Überstromzustände, Übertemperaturzustände und dergleichen.

Um eine Motorelektronik vor Zerstörung durch Überstrom und/oder Übertemperatur zu schützen, ist bekannt, auf Basis von Temperatur- und Stromsensorwerten eine Versorgungsspannung mittels eines Schalters am Eingang der Motorelektronik zu unterbrechen. Dies hat den Nachteil, dass es notwendig ist, einen ausreichend schnellen Schalter am Eingang der Motorelektronik vorzusehen, um eine zuverlässige und rechtzeitige Abschaltung und damit den Schutz der Motorelektronik sicherzustellen. Allerdings können diese Schalter relativ teuer sein.

Es ist daher die Aufgabe der vorliegenden Erfindung, eine kostengünstige Schutzschaltung bereitzustellen, die zuverlässig das Risiko einer Zerstörung der elektrischen und/oder elektronischen Bauteile der Motorsteuerung reduziert.

### Offenbarung der Erfindung

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Gemäß einem ersten Aspekt wird eine elektrische Maschine vorgeschlagen, die einen Elektromotor sowie eine Motorsteuerung aufweist. Bei der elektrischen Maschine kann es sich insbesondere um ein elektrisches Werkzeug oder eine Saugvorrichtung handeln. Beispielsweise kann das elektrische Werkzeug ein Elektrohandwerkzeug, wie beispielsweise ein Elektroschrauber, ein Bohrhammer, ein Meißelhammer oder dergleichen sein, welches seine elektrische Energieversorgung über einen austauschbaren Akkumulator oder kabelgebunden bezieht.

Der Elektromotor kann insbesondere ein bürstenloser Elektromotor sein. Elektromotoren können üblicherweise einen feststehenden Stator sowie einen sich drehenden Rotor aufweisen. Dabei kann einer von dem Stator und dem Rotor mit Permanentmagneten und der andere mit elektrischen Spulen bestückt sein. Alternativ können sowohl der Rotor als auch der Stator Spulen aufweisen. Jede stromdurchflossene Spule erzeugt ein Magnetfeld, dessen Ausrichtung abhängig von der Stromrichtung ist. Wird die Stromrichtung umgedreht, wird auch das Magnetfeld umgedreht. Durch eine entsprechende Ansteuerung der Spulen kann so eine kontinuierliche Drehung des Rotors erreicht werden.

Die Motorsteuerung umfasst eine Steuerungseinrichtung, zumindest einen Leistungsverstärker und zumindest ein Leistungsbauteil, wobei die Steuerungseinrichtung dazu eingerichtet ist, zumindest ein Steuersignal zum Steuern des Elektromotors an den zumindest einen Leistungsverstärker bereitzustellen, und wobei der zumindest eine Leistungsverstärker dazu eingerichtet ist, das bereitgestellte Steuersignal in zumindest ein Schaltsignal für das zumindest eine Leistungsbauteil umzuwandeln.

Das Leistungsbauteil kann beispielsweise ein Inverter sein. Bevorzugt kann das Leistungsbauteil eine elektrische Spannung an den Elektromotor liefern, wodurch ein Stromfluss in den Spulen erzeugt werden kann, der im Elektromotor in ein Drehmoment umgesetzt werden kann. Abhängig von der angelegten Spannung, der Trägheit des Rotors und/oder der an dem Elektromotor anliegenden Last kann das Drehmoment in eine entsprechende Drehzahl umgesetzt werden.

Weiterhin weist die elektrische Maschine zumindest eine Erfassungseinrichtung auf, die dazu ausgebildet ist, zumindest einen Zustand der elektrischen Maschine zu erfassen und zumindest ein Zustandssignal auszugeben, das indikativ für den zumindest einen erfassten Zustand ist. Ferner ist die Steuerungseinrichtung dazu ausgebildet, wenn das zumindest eine ausgegebene Zustandssignal außerhalb eines vorgegebenen Werts liegt, den Leistungsverstärker zu veranlassen, kein Schaltsignal an das zumindest eine Leistungsbauteil auszugeben.

Das zumindest eine Zustandssignal kann ein analoges Signal, wie zum Beispiel ein Messwert einer physikalischen Größe, und /oder ein digitales Signal, wie zum Beispiel ein Trigger, der dazu eingerichtet ist, anzuzeigen, dass ein Zustand vorliegt oder nicht, sein. Die Steuerungseinrichtung kann insbesondere dazu ausgebildet sein, das zumindest eine ausgegebene Zustandssignal mit dem vorgegebenen Wert zu vergleichen.

Dadurch, dass der Leistungsverstärker veranlasst wird, wenn das zumindest eine ausgegebene Zustandssignal außerhalb eines vorgegebenen Werts liegt, kein Schaltsignal an das zumindest eine Leistungsbauteil auszugeben, kann beispielsweise das Risiko reduziert werden, dass die elektrischen und/oder elektronischen Bauteile der Motorsteuerung zerstört werden. Bei der vorgeschlagenen elektrischen Maschine erfolgt im Gegensatz zum Stand der Technik keine Trennung der elektrischen Hauptversorgung durch einen Schalter am Eingang der Motorsteuerung, sondern vielmehr durch ein Abschalten des Leistungsbauteils. Dies hat ferner den Vorteil, dass ein Abschalten des Leistungsbauteils weder einen Kurzschluss noch ein hartes Bremsen des Elektromotors zu Folge hat. Vielmehr kann das Abschalten des Leistungsbauteils dazu führen, dass der Rotor des Elektromotors nicht mehr angetrieben wird und infolgedessen einfach ausrollt.

Bevorzugt kann, wenn das zumindest eine ausgegebene Zustandssignal außerhalb des vorgegebenen Werts liegt, die Steuerungseinrichtung dazu ausgebildet sein, das zumindest eine Steuersignal für den zumindest einen Leistungsverstärker abzuschalten. Weiterhin kann das zumindest eine Steuersignal auf 0Volt gelegt werden. Dies hat den Vorteil, dass das Steuersignal auf einfache Weise ausgeschaltet werden kann.

Alternativ kann die Steuerungseinrichtung ein weiteres Steuersignal ausgeben, das dazu ausgebildet ist, den Leistungsverstärker abzuschalten. Beispielsweise kann das weitere Steuersignal dazu geeignet sein, den Leistungsverstärker zu aktivieren und/oder zu deaktivieren. In einem solchen Fall kann das weitere Steuersignal beispielsweise als Triggersignal ausgebildet sein. Dies hat den Vorteil, dass das Steuersignal auf einfache Weise ausgeschaltet werden kann.

Weiterhin kann der erfasste Zustand ein Fehlerzustand der elektrischen Maschine und/oder des Elektromotors sein. Beispielsweise kann der erfasste Zustand ein Überstromzustand, ein Übertemperaturzustand oder dergleichen sein.

Gemäß einer Ausführungsform kann der erfasste Zustand geeignet sein, anzugeben, dass der Elektromotor gestoppt werden sollte. Dadurch können auf einfach und zuverlässige Weise Schäden am Elektromotor verhindert werden.

Bevorzugt kann die zumindest eine Erfassungseinrichtung zumindest eine Detektionsvorrichtung aufweisen, die ausgebildet ist, zumindest eine physikalische Größe zu detektieren, wobei die zumindest eine Erfassungseinrichtung dazu ausgebildet ist, das Zustandssignal basierend auf der detektierten physikalischen Größe auszugeben. Insbesondere kann die zumindest eine physikalische Größe ein elektrischer Strom und/oder eine Temperatur sein.

Weiterhin kann die Steuerungseinrichtung zumindest eine Schaltvorrichtung aufweisen. Insbesondere kann die zumindest eine Schaltvorrichtung zumindest einen Transistor und/oder Schalter umfassen.

Darüber hinaus kann die Erfassungseinrichtung dazu ausgebildet sein, zumindest zwei Zustände der elektrischen Maschine zu erfassen und für jeden der ersten Zustände ein zugehöriges Zustandssignal auszugeben, wobei die Steuerungseinrichtung dazu ausgebildet ist, wenn zumindest eines der ausgegebene Zustandssignale außerhalb eines vorgegebenen Werts liegt, zumindest ein Steuersignal bereitzustellen, das dazu ausgebildet ist, den Leistungsverstärker zu veranlassen, kein Schaltsignal an das zumindest eine Leistungsbauteil auszugeben.

Insbesondere kann die Steuerungseinrichtung zumindest eine ODER-Schaltung aufweisen, die die ausgegebenen Zustandssignale miteinander verknüpft. Vorteilhafterweise kann so erreicht werden, dass das Vorliegen eines außerhalb des vorgegebenen Werts liegenden Zustandssignals ausreicht, um den Leistungsverstärker zu veranlassen, kein Schaltsignal an das zumindest eine Leistungsbauteil auszugeben, selbst wenn mehrere verschiedene Zustände überwacht werden.

Weiterhin kann die zumindest eine Erfassungseinrichtung dazu eingerichtet sein, wenn das zumindest eine ausgegebene Zustandssignal außerhalb eines vorgegebenen Werts liegt, das zumindest eine Zustandssignal so lange auszugeben, bis die zumindest eine Erfassungseinrichtung ein Reset-Signal erhält. Dies ermöglicht, sicherzustellen, dass ein Zustandssignal so lange aufrechterhalten wird, bis der erfasste Zustand aufgelöst wurde, und dadurch das Schaltsignal für das zumindest eine Leistungsbauteil abgeschaltet bleibt, so dass der Elektromotor nicht weiter angetrieben wird.

Gemäß einem weiteren Aspekt wird ein Verfahren zum Steuern einer elektrischen Maschine, insbesondere eines elektrischen Werkzeugs oder einer Saugvorrichtung, vorgeschlagen, wobei die elektrische Maschine einen Elektromotor und eine Motorsteuerung mit einer Steuerungseinrichtung, zumindest einem Leistungsverstärker und zumindest einem Leistungsbauteil aufweist, wobei das Verfahren aufweist
Bereitstellen zumindest eines Steuersignals zum Steuern des Elektromotors an den zumindest einen Leistungsverstärker,
Umwandeln des bereitgestellten Steuersignals durch den zumindest einen Leistungsverstärker in zumindest ein Schaltsignal für das zumindest eine Leistungsbauteil,
Erfassen zumindest eines Zustands der elektrischen Maschine,
Ausgeben zumindest eines Zustandssignals, das indikativ für den zumindest einen erfassten Zustand ist,
Bestimmen, ob das zumindest eine ausgegebene Zustandssignal außerhalb eines vorgegebenen Werts liegt, und
Ausgeben, wenn bestimmt wird, dass das zumindest eine ausgegebene Zustandssignal außerhalb des vorgegebenen Werts liegt, eines zumindest einen weiteren Steuersignals, um den Leistungsverstärker zu veranlassen, kein Schaltsignal an das zumindest eine Leistungsbauteil auszugeben.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein schematischer Querschnitt durch eine beispielhafte elektrische Maschine in Form eines Bausaugers gemäß einer Ausführungsform;
- Figur 2: eine schematische Schnittzeichnung durch eine beispielhafte elektrische Maschine in Form einer Werkzeugmaschine gemäß einer Ausführungsform,
- Figur 3: eine schematische Darstellung einer elektrischen Maschine mit einem Elektromotor gemäß einer Ausführungsform, und
- Figur 4: eine schematische Darstellung einer Ausführungsform einer Steuerungseinrichtung aus Fig. 3,
- Figur 5: eine schematische Darstellung einer Ausführungsform einer Erfassungseinrichtung aus Fig. 3, und
- Figur 6: schematische Darstellung eines Verfahrens zum Steuern einer elektrischen Maschine gemäß einer Ausführungsform.

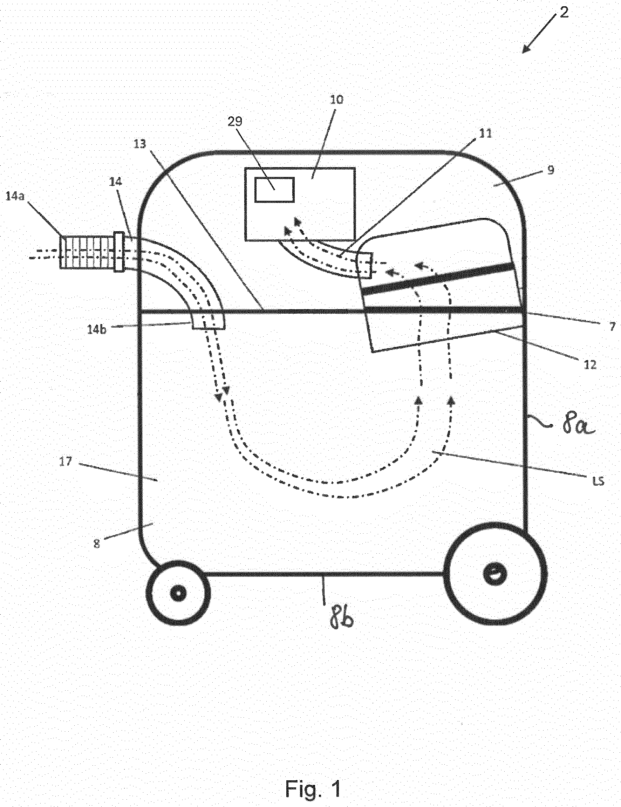

Figur 1 zeigt eine beispielhafte Darstellung einer elektrischen Maschine 1 in Form eines Bausaugers 2 gemäß einer Ausführungsform. Der Bausauger 2 weist im Wesentlichen einen Auffangbehälter 8 und einen Saugkopf 9 auf. Der Saugkopf 9 ist lösbar auf dem Auffangbehälter 8 positioniert. Der Auffangbehälter 8 enthält im Wesentlichen eine umlaufende Wandfläche 8a und einen Boden 8b. Die umlaufende Wandfläche 8a und der Boden 8b bilden einen Hohlraum 17. Der Auffangbehälter 8 dient wiederum zum Auffangen und Halten von Schmutzpartikeln, die mit Hilfe eines angesaugten Luftstroms LS aufgesammelt werden. Die Schmutzpartikel sind in den Figuren nicht dargestellt.

Der Saugkopf 9 weist eine Saugvorrichtung 10, beispielsweise eine Turbine, zum Erzeugen eines Unterdrucks auf. Als Antrieb ist in der Saugvorrichtung 10 ein Elektromotor 29 vorgesehen. Mit Hilfe des erzeugten Unterdrucks kann Umgebungsluft von außen in das Innere des Bausaugers 2 angesaugt werden. Die Turbine 10 ist über ein Zuleitungsrohr 11 mit einem Filter 7 verbunden. In der hier dargestellten Ausführungsform ist der Filter in einer Filterkassettenaufnahme 12 positioniert. Die Filterkassettenaufnahme 12 weist im Wesentlichen die Form und das Außenvolumen einer entsprechenden Filterkassette auf und dient zum Aufnehmen sowie Halten der Filterkassette.

Der Filter 7 ist zwischen im Saugkopf 9, zwischen der Saugvorrichtung 10 und dem Auffangbehälter 8, positioniert. Eine Trennebene 13 verläuft zwischen dem Saugkopf 9 und dem Auffangbehälter 8. Darüber hinaus weist der Saugkopf 9 ein Einlassrohr 14 mit einem ersten Ende 14a und zweiten Ende 14b auf. Das erste Ende 14a des Einlassrohrs 14 befindet sich außerhalb des Saugkopfes 9 und dient als Saugschlauchanschluss zum strömungsmäßigen Verbinden und Halten eines Staubsaugerschlauchs. Der Staubsaugerschlauch ist in den Figuren nicht dargestellt.

Das zweite Ende 14b des Einlassrohrs 14 weist in das Innere des Auffangbehälters 8. Durch das zweite Ende 14b des Einlassrohrs 14 strömt das im Luftstrom angesaugte Luft-Staub-Gemisch in das Innere des Auffangbehälters 8.

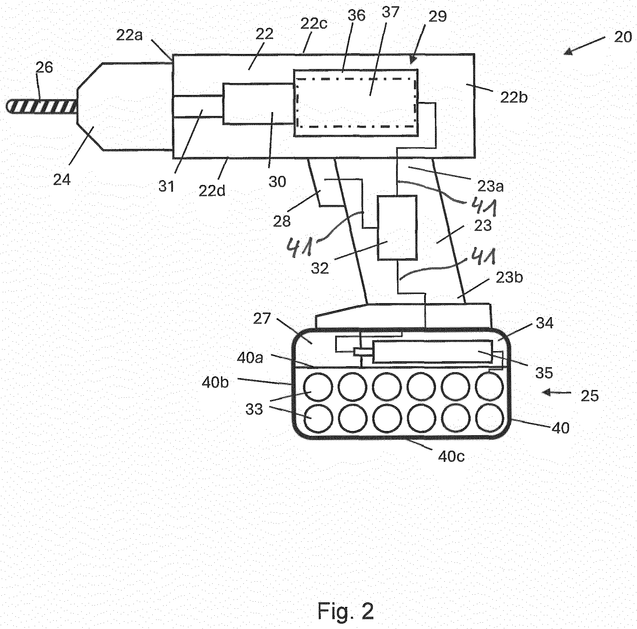

Figur 2 zeigt eine weitere beispielhafte Darstellung der elektrischen Maschine 1 in Form eine Werkzeugmaschine 20. Die Werkzeugmaschine 20 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 20 enthält dabei im Wesentlichen ein Gehäuse 22, einen Handgriff 23, eine Werkzeugaufnahme 24 und eine Energieversorgung 25.

Das Gehäuse 22 weist ein vorderes Ende 22a, ein hinteres Ende 22b, ein oberes Ende 22c und ein unteres Ende 22d auf.

An dem vorderen Ende 22a des Gehäuses 22 ist die Werkzeugaufnahme 24 positioniert. Die Werkzeugaufnahme 24 dient zum Aufnehmen und Halten eines Werkzeugs 26.

In dem vorliegenden Ausführungsbeispiel ist das Werkzeug 26 in Form eines Bohrers ausgestaltet. An dem unteren Ende 22d des Gehäuses 22 ist ein erstes Ende 23a des Handgriffs 23 positioniert. An dem zweiten Ende 23b des Handgriffs 23 ist eine Akku-Schnittstelle 27 vorgesehen.

Wie in Figur 2 gezeigt, weist der Handgriff 23 einen Aktivierungsschalter 28 auf, mit dem die Werkzeugmaschine 20 in einen Aktivierungszustand oder Deaktivierungszustand eingestellt werden kann.

An die Akku-Schnittstelle 27 kann die Energieversorgung 25 wiederlösbar befestigt werden. In dem vorliegenden Ausführungsbeispiel ist die Energieversorgung 25 in Form eines Akkumulators ausgestaltet. Die Energieversorgung 25 dient zum Versorgen der Werkzeugmaschine mit elektrischer Energie.

Entsprechend einem alternativen Ausführungsbeispiel kann die Energieversorgung 25 auch als Stromkabel zum Verbinden der Werkzeugmaschine 20 mit einer Netzstromquelle (Steckdose) ausgestaltet sein. Die als Stromkabel ausgestaltete Energieversorgung 25 ist in den Figuren nicht dargestellt.

Im Inneren des Gehäuses 22 ist im Wesentlichen ein als Antrieb dienender Elektromotor 29, eine Getriebevorrichtung 30, eine Antriebswelle 31 und eine Steuerungseinrichtung 32 positioniert.

Der Antrieb bzw. Elektromotor 29, die Getriebevorrichtung 30, die Antriebswelle 31 und die Werkzeugaufnahme 24 sind dabei so im Inneren des Gehäuses 22 zueinander angeordnet, dass ein in dem Antrieb bzw. Elektromotor 29 erzeugtes Drehmoment auf die Getriebevorrichtung 30, die Antriebswelle 31 und schließlich auf die Werkzeugaufnahme 24 bzw. auf das Werkzeug 26 übertragen werden kann.

Die Steuerungseinrichtung 32 ist mittels entsprechenden Leitungen 41 mit dem Aktivierungsschalter 8, der Akku-Schnittstelle 7 und dem Antrieb 9 verbunden.

Die als Akkumulator ausgestaltete Energieversorgung 5 kann mit der Werkzeugmaschine 20 wiederlösbar verbunden werden, um die Werkzeugmaschine 20 mit elektrischer Energie zu versorgen. Der Akkumulator 25 enthält im Wesentlichen ein Akku-Gehäuse 40, eine Anzahl an Energiespeicherzellen 33, eine Akku-Schnittstelle 34 sowie eine Steuerungseinrichtung 35.

Die Energiespeicherzellen 33 können auch als Akku-Zellen bezeichnet werden und sind im Inneren des Akku-Gehäuses 40 angeordnet.

Das Akku-Gehäuse 40 enthält dabei im Wesentlichen ein Deckelelement 40a, vier Seitenwände 40b und ein Bodenelement 40c.

Die Akku-Schnittstelle 34 ist an der Außenseite des Deckelelements 40a angeordnet und dient zum elektrischen bzw. elektronischen sowie mechanischen Verbinden des Akkumulators 25 mit der Werkzeugmaschine 20 oder einer Ladevorrichtung.

Die Ladevorrichtung dient zum Laden des Akkumulators 25 mit elektrischer Energie. Die Ladevorrichtung ist in den Figuren nicht dargestellt.

Zum elektrischen bzw. elektronischen Verbinden weist die Akku-Schnittstelle 34 einen Pluskontakt, einen Minuskontakt und einen Kommunikationskontakt auf. Der Plus- und Minuskontakt dient zum Erzeugen eines Stromkreises, wenn der Akkumulator 25 mit einer Werkzeugmaschine 20 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 25 auch eine Funkkommunikation (z.B. Bluetooth) bzw. drahtlose Kommunikation enthalten.

Die Energiespeicherzellen 33 dienen zum Aufnehmen, Speichern und erneuten Abgeben elektrischer Energie. Die Energiespeicherzellen 33 sind in zylindrischer Form sowie auf Basis einer Lithium-Ionen-Technologie ausgestaltet. Jede Energiespeicherzelle 33 enthält an einem Ende eine Kontakteinrichtung, die zur Übertragung elektrischer Energie dient. Die einzelnen Kontakteinrichtung sind über entsprechende Leitungen mit der Steuerungseinrichtung 35 des Akkumulators 25 verbunden.

Alternativ können die Energiespeicherzellen 33 auch auf einer anderen geeigneten Technologie basieren.

Die zylindrische Form der Energiespeicherzellen 33 ist ebenfalls optional, sodass auch jede andere geeignete Form bzw. Geometrie gewählt werden kann. So ist es insbesondere auch möglich, dass die Energiespeicherzellen 33 als Pouchzellen ausgestaltet sind.

Es ist zudem auch möglich, dass der Akkumulator 25 sowohl zylindrische Energiespeicherzellen 33 als auch Pouch-Zellen enthält. Es ist insbesondere möglich, dass der Akkumulator 25 lediglich eine einzige zylindrische Energiespeicherzelle 33 und eine einzige Pouchzelle enthält.

Die Steuerungseinrichtung 35 regelt und steuert verschiedene Funktionen des Akkumulators 25. Zu den Funktionen gehören unter anderen die Steuerung der Aufnahme und Abgabe von elektrischer Energie in bzw. aus den Energiespeicherzellen 33. Darüber hinaus wird mit Hilfe der Steuerungseinrichtung 35 die Menge an elektrischer Energie gesteuert, die von den Energiespeicherzellen 33 aufgenommen oder abgegeben werden sollen.

Der Elektromotor 29 ist in Form eines bürstenlosen Elektromotors ausgestaltet und enthält im Wesentlichen einen Stator 36 und einen Rotor 37.

Der Rotor 37 ist dabei im Inneren des Stators 36 positioniert und zudem drehbar zu dem Stator 36 ausgestaltet. Alternativ kann der Stator auch im Inneren des Rotors positioniert sein, wobei der Rotor weiterhin drehbar zu dem Stator ausgestaltet ist.

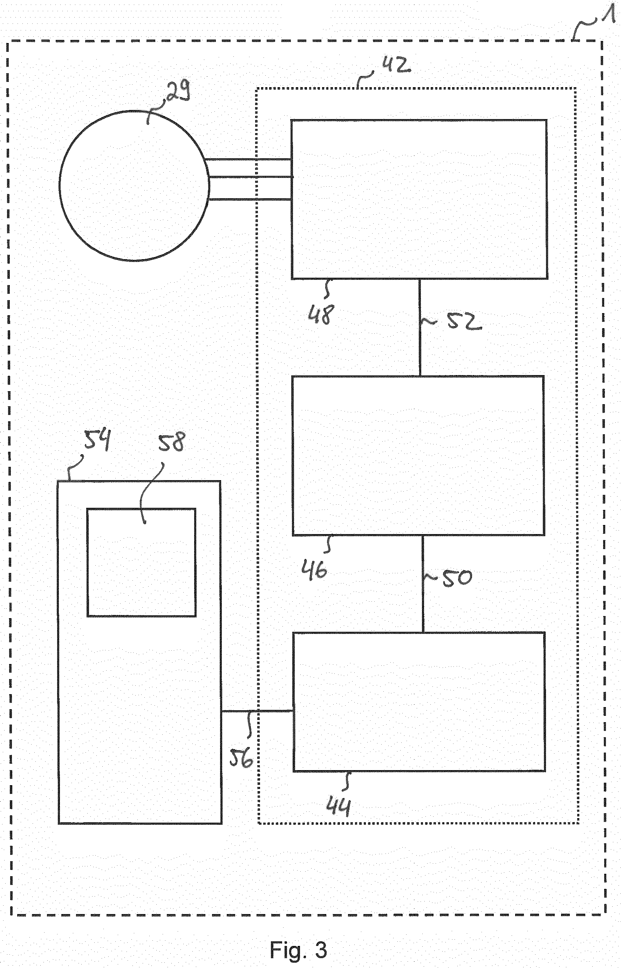

Figur 3 zeigt eine schematische Darstellung der elektrischen Maschine 1. Die elektrische Maschine 1 umfasst einen Elektromotor 15, der mittels einer Motorsteuerung 42 angesteuert wird.

Die Motorsteuerung 42 weist eine Steuerungseinrichtung 44, einen Leistungsverstärker 46 und ein Leistungsbauteil 48 auf. Das Leistungsbauteil 48 kann beispielsweise ein Inverter sein. Bevorzugt kann das Leistungsbauteil 48 eine elektrische Spannung an den Elektromotor 15 liefern, wodurch ein Stromfluss in den Spulen erzeugt werden kann, der im Elektromotor 15 in ein Drehmoment umgesetzt werden kann. Abhängig von der angelegten Spannung, der Trägheit des Rotors 37 und/oder der an dem Elektromotor 15 anliegenden Last kann das Drehmoment in eine entsprechende Drehzahl umgesetzt werden.

Um die durch das Leistungsbauteil 48 erzeugbaren Spannungen und/oder Ströme so schalten zu können, dass der Elektromotor 29 mit einem gewünschten Drehmoment und/oder einer gewünschten Drehzahl läuft, können entsprechende Steuersignale 50 bereitgestellt werden, die das Leistungsbauteil 48 dazu veranlassen, die Spannungen und/oder Ströme entsprechend zu schalten. Diese Steuersignale 50 werden von der Steuerungseinrichtung 44 bereitgestellt.

Üblicherweise ist zwischen der Steuerungseinrichtung 44 und dem Leistungsbauteil 48 der Leistungsverstärker 46 vorgesehen, der dazu eingerichtet ist, die bereitgestellten Steuersignale 50 in Schaltsignale 52 für das Leistungsbauteil 48 umzuwandeln.

Weiterhin weist die elektrische Maschine 1 eine Erfassungseinrichtung 54 auf, die dazu ausgebildet ist, einen oder mehrere Zustände der elektrischen Maschine 1, wie beispielsweise eine Temperatur der elektrischen Maschine 1, eine Temperatur des Motors 29, einen an die elektrische Maschine 1 angelegten Strom, etc., zu erfassen und ein entsprechendes Zustandssignal 56 auszugeben, das indikativ für den erfassten Zustand ist.

Das Zustandssignal kann ein analoges Signal, wie zum Beispiel ein Messwert einer physikalischen Größe, und /oder ein digitales Signal, wie zum Beispiel ein Trigger, der dazu eingerichtet ist, anzuzeigen, dass ein Zustand vorliegt oder nicht, sein.

Die Steuerungseinrichtung 44 vergleicht das empfangene Zustandssignal 56 mit einem vorgegebenen Wert. Liegt das Zustandssignal 56 außerhalb des vorgegebenen Werts, veranlasst die Steuerungseinrichtung 44 den Leistungsverstärker, kein Schaltsignal 52 an das zumindest eine Leistungsbauteil auszugeben. Dies kann zum einen dadurch erfolgen, dass kein Steuersignal 50 an den Leistungsverstärker 46 ausgegeben wird bzw. dass das Steuersignal 50 abgeschaltet oder auf 0V gelegt wird. Alternativ kann die Steuerungseinrichtung 44 ein weiteres Steuersignal ausgeben, das dazu ausgebildet ist, den Leistungsverstärker abzuschalten.

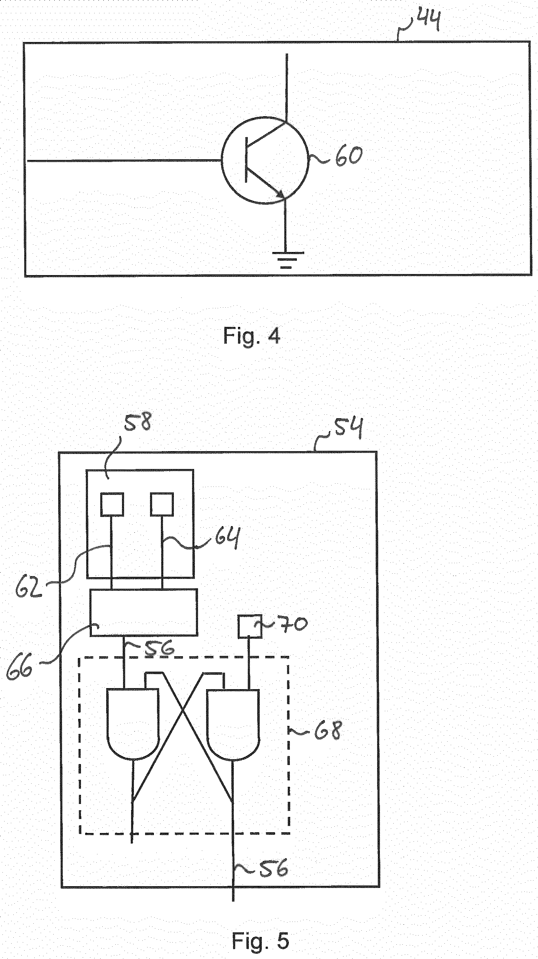

Wie genauer in Figur 4 gesehen werden kann, weist die Steuerungseinrichtung 44 eine Schaltvorrichtung 60 auf. In Figur 4 ist die Schaltvorrichtung 60 als ein Transistor ausgeführt. Alternativ oder zusätzlich kann die Schaltvorrichtung 60 auch einen Schalter umfassen.

Um den Zustand der elektrischen Maschine 1 erfassen zu können, umfasst die Erfassungseinrichtung 54 eine Detektionsvorrichtung 58, die ausgebildet ist, zumindest eine physikalische Größe zu detektieren. Beispielsweise kann die zumindest eine physikalische Größe ein elektrischer Strom und/oder eine Temperatur sein.

Weiterhin kann die Erfassungseinrichtung 54 auch ausgebildet sein, einen Fehlerzustand der elektrischen Maschine 1 und/oder des Elektromotors 29 zu erfassen und/oder zu erfassen, ob der Elektromotor 29 gestoppt werden sollte.

Figur 5 zeigt eine weitere Ausführungsform der Erfassungseinrichtung 54. Die in der Figur 5 gezeigten Erfassungseinrichtung 54 ist ausgebildet, zumindest zwei Zustände der elektrischen Maschine 1 zu erfassen und für jeden der erfassten Zustände ein zugehöriges Zustandssignal 62, 64 auszugeben. Die beiden Zustandssignale 62, 64 sind über eine ODER-Schaltung 66 miteinander verknüpft, so dass wenn zumindest eines der ausgegebene Zustandssignale 62, 64 außerhalb eines vorgegebenen Werts liegt, der Leistungsverstärker 46 veranlasst wird, kein Schaltsignal 52 an das Leistungsbauteil 48 auszugeben.

Weiterhin umfasst die Erfassungseinrichtung 54 der Figur 5 ein Flip-Flop 68, das dazu ausgebildet ist, das ausgegebene Zustandssignal 56 so lange auszugeben, bis die Erfassungseinrichtung 54 ein Reset-Signal 70 erhält.

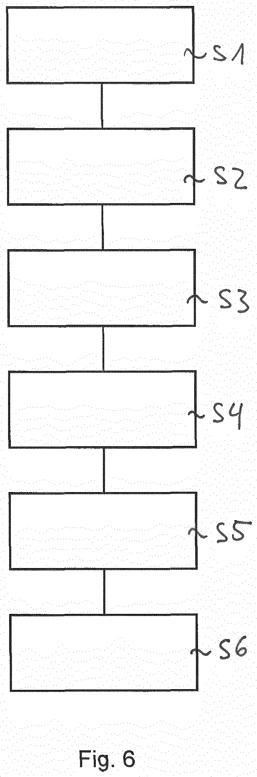

Figur 6 zeigt schematisch ein Verfahren zum Steuern der elektrischen Maschine 1 aus der Figur 3. In einem ersten Schritt S1 des Verfahrens wird das Steuersignal 50 zum Steuern des Elektromotors 29 an den Leistungsverstärker 46 gesendet bzw. bereitgestellt. Der Leistungsverstärker 46 wandelt in einem Schritt S2 das bereitgestellte bzw. empfangene Steuersignal 50 in ein Schaltsignal 52 für das Leistungsbauteil 48 um.

Die Erfassungseinrichtung 54 erfasst, insbesondere mit Hilfe der Detektionsvorrichtung 58, zumindest einen Zustand der elektrischen Maschine 1 in einem Schritt S3. In einem anschließenden Schritt S4 wird von der Erfassungseinrichtung 54 ein Zustandssignals 56 ausgegeben, das indikativ für den erfassten Zustand ist. Die Steuerungseinrichtung 44 bestimmt in einem Schritt S5, ob das ausgegebene Zustandssignal 56 außerhalb eines vorgegebenen Werts liegt und gibt in einem Schritt S6, wenn bestimmt wurde, dass das ausgegebene Zustandssignal 56 außerhalb des vorgegebenen Werts liegt, ein weiteres Steuersignal aus, um den Leistungsverstärker 46 zu veranlassen, kein Schaltsignal 52 an das Leistungsbauteil 48 auszugeben.

Zusammenfassend kann, dadurch, dass der Leistungsverstärker 46 veranlasst wird, kein Schaltsignal an das Leistungsbauteil 48 auszugeben, wenn das Zustandssignal 56 außerhalb eines vorgegebenen Werts liegt, das Risiko reduziert werden, dass die elektrischen und/oder elektronischen Bauteile der Motorsteuerung 42 zerstört werden. Bei der vorgeschlagenen elektrischen Maschine 1 erfolgt im Gegensatz zum Stand der Technik keine Trennung der elektrischen Hauptversorgung durch einen Schalter am Eingang der Motorsteuerung 42, sondern vielmehr durch ein Abschalten des Leistungsbauteils. Dies hat den Vorteil, dass ein Abschalten des Leistungsbauteils weder einen Kurzschluss noch ein hartes Bremsen des Elektromotors zu Folge hat. Vielmehr kann das Abschalten des Leistungsbauteils dazu führen, dass der Rotor des Elektromotors nicht mehr angetrieben wird und infolgedessen einfach ausrollt.

### Bezugszeichenliste

- 1: elektrische Maschine
- 2: Bausauger
- 7: Filter
- 8: Aufwandbehälter
- 8a: Wandfläche
- 8b: Boden
- 9: Saugkopf
- 10: Saugvorrichtung
- 11: Zuleitungsrohr
- 12: Filterkassettenaufnahme
- 13: Trennebene
- 14: Einlassrohr
- 14a: erstes Ende
- 14b: zweites Ende
- 15: Elektromotor
- 17: Hohlraum
- 20: Werkzeugmaschine
- 22: Gehäuse
- 22a: vorderes Ende
- 22b: hinteres Ende
- 22c: oberes Ende
- 22d: unteres Ende
- 23: Handgriff
- 23a: erstes Ende
- 23b: zweites Ende
- 24: Werkzeugaufnahme
- 25: Energieversorgung
- 26: Werkzeug
- 27: Akku-Schnittstelle
- 28: Aktivierungsschalter
- 29: Elektromotor
- 30: Getriebevorrichtung
- 31: Antriebswelle
- 32: Steuerungseinrichtung
- 33: Energiespeicherzellen
- 34: Akku-Schnittstelle
- 35: Steuerungseinrichtung
- 36: Stator
- 37: Rotor
- 40: Akku-Gehäuse
- 40a: Deckelement
- 40b: Seitenwand
- 40c: Bodenelement
- 41: Leitungen
- 42: Motorsteuerung
- 44: Steuerungseinrichtung
- 46: Leistungsverstärker
- 48: Leistungsbauteil
- 50: Steuersignal
- 52: Schaltsignal
- 54: Erfassungseinrichtung
- 56: Zustandssignal
- 58: Detektionsvorrichtung
- 60: Schaltvorrichtung
- 62: Zustandssignal
- 64: Zustandssignal
- 66: ODER-Schaltung
- 68: Flip-Flop
- 70: Re-Set

- S1...S6: Verfahrensschritte

## Patentansprüche

1. Elektrische Maschine (1), insbesondere ein elektrisches Werkzeug (20) oder eine Saugvorrichtung (2), mit einem Elektromotor (29) und einer Motorsteuerung (42), wobei die Motorsteuerung (42) eine Steuerungseinrichtung (44), zumindest einen Leistungsverstärker (46) und zumindest ein Leistungsbauteil (48) aufweist, wobei die Steuerungseinrichtung (44) dazu eingerichtet ist, zumindest ein Steuersignal (50) zum Steuern des Elektromotors (29) an den zumindest einen Leistungsverstärker (46) bereitzustellen, und wobei der zumindest eine Leistungsverstärker (46) dazu eingerichtet ist, das bereitgestellte Steuersignal (50) in zumindest ein Schaltsignal (52) für das zumindest eine Leistungsbauteil (48) umzuwandeln, wobei die elektrische Maschine (1) weiterhin zumindest eine Erfassungseinrichtung (54) aufweist, die dazu ausgebildet ist, zumindest einen Zustand der elektrischen Maschine (1) zu erfassen und zumindest ein Zustandssignal (56, 62, 64) auszugeben, das indikativ für den zumindest einen erfassten Zustand ist, wobei die Steuerungseinrichtung (44) dazu ausgebildet ist, wenn das zumindest eine ausgegebene Zustandssignal (56, 62, 64) außerhalb eines vorgegebenen Werts liegt, den Leistungsverstärker (46) zu veranlassen, kein Schaltsignal (52) an das zumindest eine Leistungsbauteil (48) auszugeben.

2. Elektrische Maschine (1) nach Anspruch 1, wobei, wenn das zumindest eine ausgegebene Zustandssignal (56, 62, 64) außerhalb des vorgegebenen Werts liegt, die Steuerungseinrichtung (44) dazu ausgebildet ist, das zumindest eine Steuersignal (50) für den zumindest einen Leistungsverstärker (46) abzuschalten.

3. Elektrische Maschine (1) nach Anspruch 1 oder 2, wobei der erfasste Zustand ein Fehlerzustand der elektrischen Maschine (1) und/oder des Elektromotors (29) ist.

4. Elektrische Maschine (1) nach einem der vorherigen Ansprüche, wobei der erfasste Zustand geeignet ist, anzugeben, dass der Elektromotor (29) gestoppt werden sollte.

5. Elektrische Maschine (1) nach einem der vorherigen Ansprüche, wobei die zumindest eine Erfassungseinrichtung (54) zumindest eine Detektionsvorrichtung aufweist, die ausgebildet ist, zumindest eine physikalische Größe zu detektieren, wobei die zumindest eine Erfassungseinrichtung (54) dazu ausgebildet ist, das Zustandssignal (56, 62, 64) basierend auf der detektierten physikalischen Größe auszugeben.

6. Elektrische Maschine (1) nach Anspruch 5, wobei die zumindest eine physikalische Größe ein elektrischer Strom und/oder eine Temperatur ist.

7. Elektrische Maschine (1) nach einem der vorherigen Ansprüche, wobei die Steuerungseinrichtung (44) zumindest eine Schaltvorrichtung (60) aufweist.

8. Elektrische Maschine (1) nach Anspruch 7, wobei die zumindest eine Schaltvorrichtung (60) zumindest einen Transistor und/oder Schalter umfasst.

9. Elektrische Maschine (1) nach einem der vorherigen Ansprüche, wobei die Erfassungseinrichtung (54) dazu ausgebildet ist, zumindest zwei Zustände der elektrischen Maschine (1) zu erfassen und für jeden der ersten Zustände ein zugehöriges Zustandssignal (56, 62, 64) auszugeben, wobei die Steuerungseinrichtung (44) dazu ausgebildet ist, wenn zumindest eines der ausgegebene Zustandssignale (56, 62, 64) außerhalb eines vorgegebenen Werts liegt, den Leistungsverstärker (46) zu veranlassen, kein Schaltsignal (52) an das zumindest eine Leistungsbauteil (48) auszugeben.

10. Elektrische Maschine (1) nach Anspruch 9, wobei die Steuerungseinrichtung (44) und/oder die Erfassungseinrichtung (54) zumindest eine ODER-Schaltung (66) aufweist, die die ausgegebenen Zustandssignale (56, 62, 64) miteinander verknüpft.

11. Elektrische Maschine (1) nach einem der vorherigen Ansprüche, wobei die zumindest eine Erfassungseinrichtung (54) dazu eingerichtet ist, wenn das zumindest eine ausgegebene Zustandssignal (56, 62, 64) außerhalb eines vorgegebenen Werts liegt, das zumindest eine Zustandssignal (56, 62, 64) so lange auszugeben, bis die zumindest eine Erfassungseinrichtung (54) ein Reset-Signal (70) erhält.

12. Verfahren zum Steuern einer elektrischen Maschine (1), insbesondere eines elektrischen Werkzeugs (20) oder einer Saugvorrichtung (2), wobei die elektrische Maschine (1) einen Elektromotor (29) und eine Motorsteuerung (42) mit einer Steuerungseinrichtung (44), zumindest einem Leistungsverstärker (46) und zumindest einem Leistungsbauteil (48) aufweist, wobei das Verfahren aufweist
Bereitstellen (S1) zumindest eines Steuersignals (50) zum Steuern des Elektromotors (29) an den zumindest einen Leistungsverstärker (46),
Umwandeln (S2) des bereitgestellten Steuersignals (50) durch den zumindest einen Leistungsverstärker (46) in zumindest ein Schaltsignal (52) für das zumindest eine Leistungsbauteil (48),
Erfassen (S3) zumindest eines Zustands der elektrischen Maschine (1), Ausgeben (S4) zumindest eines Zustandssignals (56, 62, 64), das indikativ für den zumindest einen erfassten Zustand ist,
Bestimmen (S5), ob das zumindest eine ausgegebene Zustandssignal (56, 62, 64) außerhalb eines vorgegebenen Werts liegt, und
wenn bestimmt wird, dass das zumindest eine ausgegebene Zustandssignal (56, 62, 64) außerhalb des vorgegebenen Werts liegt, Veranlassen (S6) des Leistungsverstärkers (46), kein Schaltsignal an das zumindest eine Leistungsbauteil (48) auszugeben.
